# EUROPEAN PATENT APPLICATION

(11) **EP 2 664 245 A1**
(43) Date of publication of application: **20.11.2013**
(21) Application number: 13167938.3
(22) Date of filing: 15.05.2013
(51) Int. Cl.: A42B 3/04, B62J 6/00, B62J 6/02, B62J 6/04, B62J 6/16

(54) **Vehicle warning light system**

(30) Priority: 17.05.2012 GB 201208673
(71) Applicant: Ransom, Steven Andrew, Uckfield East Sussex TN22 2HJ (GB)
(72) Inventor: Ransom, Steven Andrew, Uckfield East Sussex TN22 2HJ (GB)
(74) Representative: Giles, Ashley Simon

(57) **Abstract**

A mount (9) adapted for attaching a brake switch (8) to a brake control lever (14) of a vehicle, such as a bicycle (2).

The mount (9) and/or the switch (8) may comprise part of a vehicle lighting system. The vehicle lighting system may comprise a control unit (6) incorporating a wireless sender unit, which is electrically connected to the switch (8), a wireless receiver unit and a turn/direction and/or brake indicator light (16) electrically connected to the wireless receiver unit.

## Description

This invention relates to vehicle warning light systems which can be retrofitted, or fitted as original equipment, to any vehicle. Particularly, although not exclusively, this invention relates to a wireless bicycle warning light system which can be provided with both direction indication lights and brake indicator lights.

### Backaround

EP 1394029 discloses a bicycle indicator light system comprising a wireless sender unit which is intended for fitment to the handlebar of a bicycle, and includes a housing on which are mounted the rider operated indictor light switches. The housing is bulky and difficult to site on the handlebars in a position which the rider can operate without moving their hand from the handgrips. Therefore this indicator light system can be distracting for the rider to use, just as they are about to make a manoeuvre, and is potentially dangerous. The present invention was developed to address this problem.

### Statements of Invention

According to an aspect of the present invention there is provided a mount for mounting a switch on a control lever of a vehicle, the mount at least partially encircling the control lever.

The mount may, for example, comprise a bracket, clamp or band.

The control lever may comprise a hand operated brake control lever.

The mount may completely encircle the control lever.

The mount may be flexible.

The mount may be of low profile design, so that it does not obstruct operation of the control lever.

The mount may be rigid and comprise at least one arm which is shaped to clip over the control lever.

The mount may comprise a strap, the strap may be made from elasticated material.

Means may be provided for releasably connecting the switch to the mount. The means for releasably connecting may comprise a hook and loop type fastening.

According to another aspect of the present invention, there is provided a switch assembly, comprising a switch and a mount as described above. The switch may comprise a pressure switch.

According to another aspect of the present invention, there is provided a mount for attaching a switch to a vehicle, the mount being adapted for attachment to the vehicle and the switch being provided with a hook and loop type fastener which engages with a corresponding hook and loop type fastener formed on the outside of the mount. A plurality of switches may be attached to the mount with hook and loop type fasteners.

The switch may control at least one light.

The mount and/or the switch assembly may comprise part of a vehicle lighting system. The vehicle lighting system may comprise a wireless sender unit hard wired to the switch assembly, a wireless receiver unit and a light hard wired to the wireless sender unit.

The light may be fitted to a seat and/or seat stem.

The light may be fitted to a helmet of a user of the vehicle. The light may be fitted to a lighting strip attached to the helmet. The vehicle may be a bicycle. The light may comprise an LED.

The light may comprise a brake light and/or a turn indicator light of the vehicle.

According to another aspect of the present invention there is provided a vehicle lighting system comprising a wireless sending unit, a wireless receiving unit, an indicator light, and a switch for operating the indicator light, the switch being attached to the wireless sending unit by a flexible electric cable. The indicator light may be a turn indicator light or a brake indicator light.

In order to make the switch small enough to be fitted to any bicycles, its size should be minimised. It may for example be no more than 25 mm long, and/or no more than 15 mm wide.

The switch may comprise a left indicator control which may comprise a left indicator button and a right indicator control which may comprise a right indicator button.

The wireless sending unit may include a rechargeable power pack. The rechargeable power pack may be recharged through a charging socket on a flexible electric cable. For example, it may be charged from a 5V computer USB output and/or a wall charging unit.

The switch may be provided with a control panel light which is illuminated when the brake or direction indicator light is operating. The control panel light may flash, when the light is operating. The control panel light may also be illuminated when the charge in the battery pack is below a predetermined level.

A buzzer may also be used to indicate when the light is operating and/or to indicate when the charge in the battery pack is below a predetermined level.

### Brief Description of the Drawings

For a better understanding of the present invention, and to show how it may be carried into effect, reference will now be made, by way of example, to the accompanying drawings in which:
Figure 1 is a view of a front portion of the vehicle lighting system as fitted to the handlebars of a bicycle;
Figure 2 is a view of the rear portion of the vehicle lighting system of Figure 1, when attached to the helmet of a rider of the bicycle;
Figure 3A is an end view of a bicycle lighting system control unit;
Figure 3B is a perspective view of a bicycle lighting system control unit
Figure 4 is a perspective view of a mount for a brake switch; and
Figure 5 is a view of the rear portion of the vehicle lighting system of Figure 1 when attached to the seat and seat post of the bicycle.

### Detailed Description

This invention has application to any vehicle which might benefit from the provision of indicator lights, such as direction indicator lights and brake warning indicator lights. However, for simplicity in the detailed description below the invention is described in relation to a brake and direction indicator light system for a bicycle 2.

Referring to Figures to 1 and 2, a bicycle indicator light system includes a bicycle mounted kit comprising a direction indicator and brake light control unit 6 mounted in a housing 11, and connected to a brake indicator switch 8 by means of a flexible electric cable 12. A wireless sender unit in the housing 11 communicates with a remote wireless receiver unit in a rear mounted lighting arrangement 16.

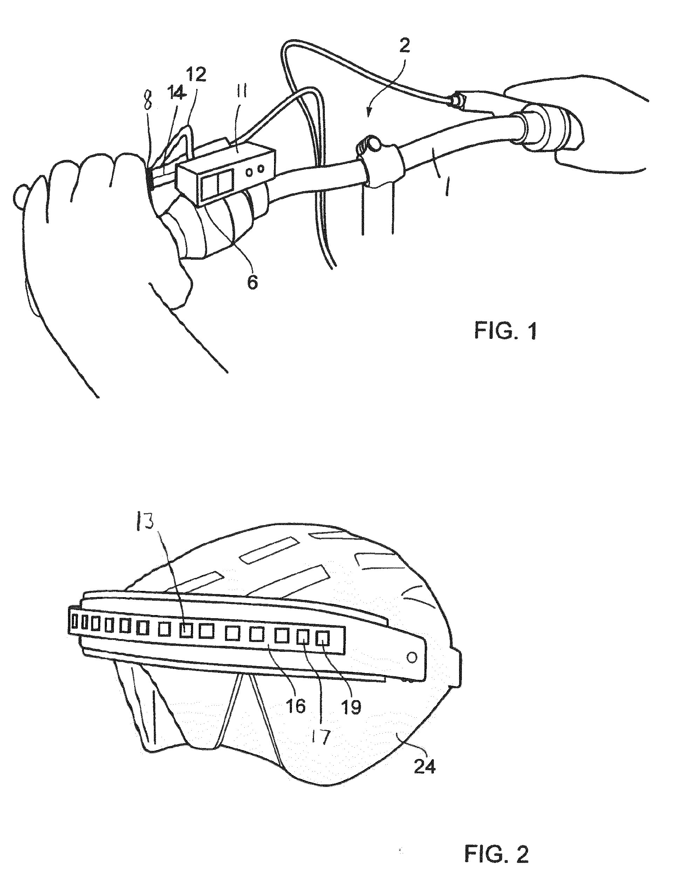

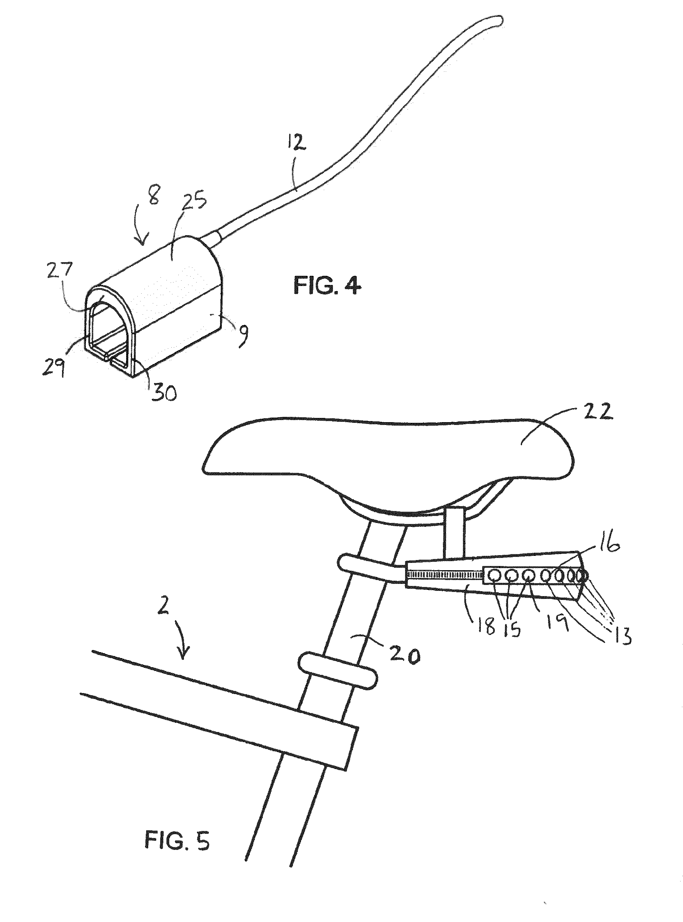

The rear mounted lighting arrangement 16 is electrically connected to a brake light/rear light 13 and left and right indicator lights 15, 17. The lights 13, 15, 17 and/or the wireless receiver unit may be fitted in separate housings or may be incorporated into the single lighting bar 16, as shown in Figures 2 and 5.

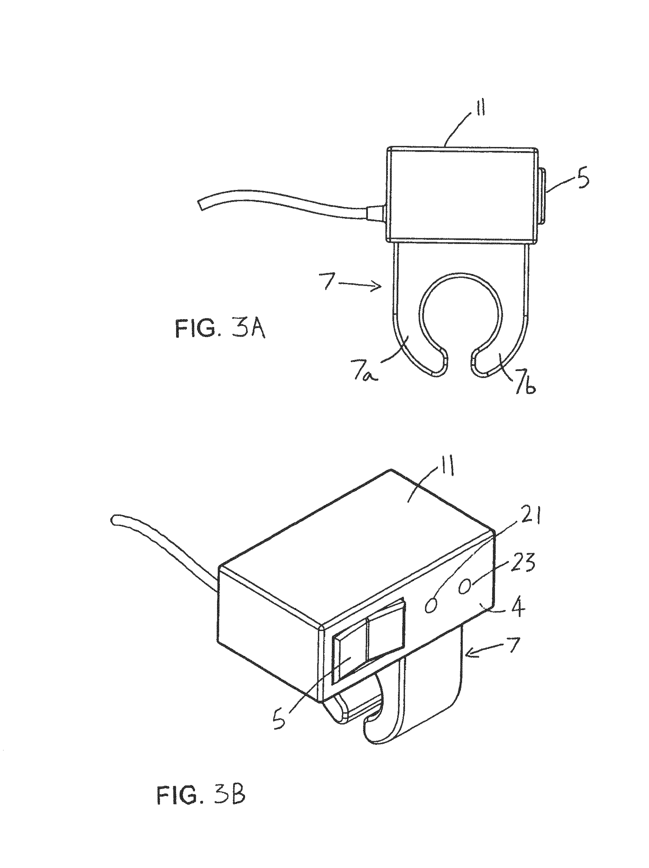

As best shown in Figures 3A and 3B, the housing 11 is fixed to the handlebar 1 by a bracket 7 comprising a pair of resilient clamp arms 7a, 7b which are integrally formed with the housing 11. In alternative embodiments the bracket 7 may be a separate component fixed to the housing 11, may comprise a flexible band, may be attached with a hook and loop type fastener, or may comprise a suction cup or a clamp which may be bolted or screwed onto the handlebar.

The housing 11 may comprise any desired number of indicator lights and switches. In the illustrated embodiment, the housing 11 is provided with a bi-directional finger operated direction indicator switch 5, and a pair of turn indicator lights 21, 23 mounted into a face plate 4 of the indicator housing 11.

The brake indicator switch 8 is fixed to a brake control lever 14 of the bicycle 2 and comprises a pressure activated switch which is embedded in, or attached to, a mount 9. In the embodiment illustrated in Figure 4, the switch 8 is embedded in a flexible pad 25 which is fixed to a mount 9 in the form of a tubular clamping element which is substantially U-shaped in cross section. The mount 9 comprises a main body 27 to which the brake indicator switch 8 is fixed and a pair of clamping jaws 29,30, which are substantially L-shaped in cross section and extend from opposite sides of the main body 27 to define a substantially D-shaped opening which is thus similar in cross section and dimensions to a standard brake lever 14.

In alternative embodiments, the mount may be elastic and may be stretched over the end of the brake control lever 14 of the bicycle 2, and then slipped into position at the base of the control lever 14. Alternatively, the mount 9 may comprise a flexible strap attached by a hook and loop type fastener.

Alternatively, a rear face (not shown) of the brake indicator switch 8 may be provided with either hook or loop fasteners as appropriate to be able to attach the brake indictor housing 8 to co-operating hook or loop type fastener formed on a strap, after it has been attached to the brake control lever 14. Alternatively, the mount 9 may comprise another type of fitting such as a suction cup, or clamp which may be bolted or screwed onto the brake control lever 14.

The mount 9 and/or the indicator housing 11 may be formed from compliant, resilient or flexible material and may have rounded edges, so that they are ergonomic and comfortable in operation.

Referring to Figures 2 and 5, the lighting bar 16 may use any type of light, but in the illustrated embodiment uses a plurality of LEDs 19 which are grouped into left turn signal LEDs 15 and right turn signal LEDs 17, separated by brake signal LEDs 13. In one embodiment, the brake signal LEDs 13 are illuminated at a first brightness level during normal operation to provide a rear light, but are operated at a second higher brightness level to provide a brake warning when the brake indicator switch 8 is activated.

Figure 5 shows the lighting bar 16 fitted into a housing 18, which may be constructed of expanded foam. The housing 18 is mounted to a seat post 20 and seat 22 of a bicycle.

Figure 2 shows an alternative configuration in which the housing 18 of the light bar 16 is fitted to a bicycle helmet 24. For example, the expanded foam housing 18 may be glued or integrally formed with a shell of the helmet or be held on with a separate strap. Also the light bar 16 might itself comprise a flexible strip, which may be attached to the helmet by self adhesive pads.

Each light bar 16 of Figures 2 and 5 could be used on its own, or could be used together, actuated by a single wireless sender unit. It will be appreciated that the direction indicator lights 15, 17 and brake warning lights 13 could be fitted to other parts of the bicycle 2, such as to a cycle rack or panniers or to an item of clothing or equipment of the rider of the bicycle 2. For example, the lights 13, 15, 17 could be incorporated into clothing. In addition, or instead, direction indicator lights could be fitted to the front of a vehicle. For example they could be fitted to the handlebar or to a front mounted luggage bracket or basket. In one beneficial embodiment, not illustrated, individual indicator lights, each with a dedicated power supply and dedicated wireless receiver unit, could be provided as plug-in units which fit directly into the open ends of the handlebars.

Appropriate parts of the bicycle lighting system, such as the control unit 6 and/or the rear light bar 16, may be provided with conventional battery packs (not shown), or rechargeable battery packs. In one embodiment, the battery packs may be recharged through sockets (not shown) into which may be fitted cables with jack plugs for attachment to a USB port of a computer or other device.

In use, the control unit 6 is attached to the front of the bicycle 2 by pushing the resilient clamp arms 7a, 7b of the control unit 6 against the handle bar 1, so that the resilient clamp arms 7a, 7b are forced apart and then snap fit around the handle bar 1. In this orientation, when the rider of the bicycle 2 wants to indicate left or right, he or she can apply pressure with their thumb to an appropriate side of the direction indicator switch 5. If the indicator switch 5 is adapted to provide tactile feedback when it has been pressed to one side or the other, this is helpful to the rider in knowing that the switch 5 has been operated correctly.

In alternative embodiments, the bracket 7 may be a simple suction cup, or a clamp mounting which is attached to the handlebar by screws or bolts, or may alternatively comprise a flexible band which is provided with hook and loop type fasteners on each side, as described above. Alternatively, the bracket 7 may comprise a band which is attached by winding it around the handlebar 1, such that hooks on one face of the bracket 7 engage with loops on the opposite face. The control unit 6 could be provided with openings (not shown) through which the band is threaded or could alternatively be provided with a hook or loop pad, such that the control unit 6 can be attached to the outside of the corresponding hooks or loops on the band.

The mount 9 is then fitted by inserting an end of the brake control lever 14 into the D-shaped opening in the mount 9 and then pushing the mount 9 along the brake lever into the desired position where it will be gripped by the rider's fingers when pressure is applied to the brake lever 14.

As the opening in the mount 9 has the same cross sectional shape as the brake control lever, the mount 9 can only be fitted with the curved surface beneath the main body of the mount 9 lying adjacent to the curved front face of the brake control lever, so the brake indicator switch is held in position on the front face of the brake lever 14, and the mount is prevented from rotating around the brake lever.

With this alignment, when the rider of the bicycle 2 applies the brakes, it is a simple matter for the rider to apply pressure directly to the brake indicator switch 8, for example using their index finger, without taking their hand from a hand grip of the bicycle 2. When the rider presses on the brake indicator switch 8, the brake light 13 is illuminated, and when he or she releases the pressure on the brake indicator switch 8, the brake light 13 switches off.

The bicycle indicator light system is completed by the rider putting on a helmet 24 into which the rear light bar 16 is fitted, or by attaching the rear light bar 16 to a rear part of the bicycle 2, such as to a frame of the seat 22 and/or to the seat post 20 and/or to another component of the bicycle 2.

Once the bicycle indicator light system has been installed, it may be switched on for use by means of a conventional on/off switch, or pressure switch (not shown) which may, for example, be located in the control unit 6 and/or in the rear light bar 16, or in the helmet.

In an alternative embodiment the mount 9 may comprise a clamp, which is attached to the handlebar by screws or bolts, or may alternatively comprise a flexible band which is provided with hook and loop type fasteners on each side, as described above. Alternatively, the mount may comprise a band, which is attached by winding it around the brake control lever 14, such that the hooks on one face of the mount 9 engage with the loops on the opposite face. In this embodiment, the brake indicator switch 8 can be provided with openings (not shown) through which the band is threaded, or may alternatively be provided with a hook or loop pad, such that the brake indicator switch 8 can be attached to the outside of the corresponding hooks or loops on the mount 9.

In an embodiment, not illustrated, the brake indicator switch is attached to a front side of the mount 9 by means of engagement of hook and loop type fasteners. In this specification, the front of the brake control lever means the side facing towards the front of the bicycle 2.

If the brake indicator switch 8 is adapted to provide tactile feedback when it has been pressed, this is helpful to the rider in knowing that the brake indicator switch 8 has been operated correctly during a braking manoeuvre. Similarly, if the rider of the bicycle 2 wants to indicate left or right, he or she can apply pressure with the outside of one finger to an appropriate side of the direction indicator switch 5. Again, this can be achieved without taking their hand from a hand grip of the bicycle 2, greatly increasing the safety of the rider. The direction indicator light could be switched off automatically after a predetermined time period, or could be switched off by a second press of the indicator switch 5.

## Claims

1. A mount adapted for attaching a brake switch to a brake control lever of a vehicle.

2. A mount as claimed in claim 1, wherein the mount comprises a bracket, clamp band or strap.

3. A mount as claimed in claim 1 or 2, wherein the mount is at least partially flexible.

4. A mount as claimed in any preceding claim, further comprising means for releasably connecting the brake switch to the mount.

5. A mount as claimed in claim 4, wherein the mount is releasably connected to the brake switch by a hook and loop type fastener

6. A mount as claimed in any preceding claim, wherein the mount comprises a tubular body which is substantially D-shaped in cross section.

7. A vehicle lighting system comprising a mount as claimed in any preceding claim, a brake switch and a brake light controlled by the brake switch.

8. A vehicle lighting system as claimed in claim 7, wherein the brake switch comprises a pressure switch.

9. A vehicle lighting system as claimed in claim 7, wherein the brake light is fitted to a helmet of a user of the vehicle.

10. A vehicle lighting system as claimed in any of claims 7 to 9, wherein the brake light comprises at least one LED.

11. A vehicle lighting system as claimed in any of claims 7 to 10, further comprising a direction indicator switch and direction indicator lights controlled from the direction indicator switch.

12. A vehicle lighting system as claimed in claim 11, wherein the direction indicator switch comprises a rocker switch which provides a left indicator control when pushed one way and a right indicator control when pushed the opposite way.

13. A vehicle lighting system as claimed in claim 11 or 12, further comprising a warning light which is illuminated when the brake switch or the direction indicator switch is operated.

14. A vehicle lighting system as claimed in any of claims 7 to 13, further comprising a wireless sender unit electrically connected to the brake switch and a wireless receiver unit electrically connected to the brake light.

15. A vehicle lighting system as claimed in any of claims 11 to 14, further comprising an audible warning device which makes a sound when the brake switch or the direction indicator switch is operated.
